# EUROPEAN PATENT APPLICATION

(11) **EP 4 661 238 A1**
(43) Date of publication of application: **10.12.2025**
(21) Application number: 24760353.3
(22) Date of filing: 20.02.2024
(51) Int. Cl.: H02J 7/00, H01M 10/44

(54) **POWER STORAGE DEVICE**

(30) Priority: 24.02.2023 JP 2023026973
(71) Applicant: Sony Semiconductor Solutions Corporation, Atsugi-shi, Kanagawa 243-0014 (JP)
(72) Inventor: YOSHINO, Yoshitaka, Atsugi-shi, Kanagawa 243-0014 (JP); YOSHIDA, Toshikazu, Atsugi-shi, Kanagawa 243-0014 (JP)
(74) Representative: D Young & Co LLP
(86) International application number: PCT/JP2024/005987
(87) International publication number: WO 2024/177055

(57) **Abstract**

Electric power is recovered from noise components generated by electrostatic induction.

A power storage device includes: a first metal element electrically floating from a ground; a second metal element that is electrostatically coupled to the first metal element to cause charge bias in the first metal element; and a power storage unit that is connected to the first metal element and the second metal element, and stores a potential difference generated between the first metal element and the second metal element.

## Description

### TECHNICAL FIELD

The present technology relates to a power storage device designed to recover electric power from noise components.

### BACKGROUND ART

Harvesting electric field energy generated by a quasi-electrostatic field or a distant field that is present around us with an antenna, and converting the electric field energy into electric power (energy harvest) has been considered. In the case of environmental power generation, a current flowing through an antenna to a circuit is rectified into direct current and is converted into electric energy. A diode is used to rectify a radio wave into a direct current. An antenna equipped with a rectifier circuit is called a rectenna.

The inventor of the present application has proposed a harvester capable of obtaining larger reception power by taking in electric field energy of a quasi-electrostatic field (near field) in addition to a wide range of radio waves with a configuration different from conventional one that uses a reception antenna and converts energy of radio waves into electric power (see Patent Document 1).

### CITATION LIST

### PATENT DOCUMENT

Patent Document 1: WO 2021/261076 A

### SUMMARY OF THE INVENTION

### PROBLEMS TO BE SOLVED BY THE INVENTION

The one disclosed in Patent Document 1 mentioned above requires an antenna as a current collector and a rectifier/booster circuit for converting an alternating-current signal obtained with the antenna into a direct-current signal.

The present technology relates to a power storage device that utilizes a potential difference in an electrostatic field, is intended for an electrostatic field without a temporal change, and obtains electric power from a component not including any frequency component. Accordingly, it is possible to eliminate the need for a rectifier circuit (a rectifier diode) required for converting a frequency component into a direct current. As a result, the number of components can be reduced, the mounting area can be reduced, and the costs can be lowered. The present technology aims to provide a power storage device that does not require a rectifier circuit.

### SOLUTIONS TO PROBLEMS

The present technology relates to a power storage device that includes:
a first metal element electrically floating from a ground;
a second metal element that is electrostatically coupled to the first metal element to cause charge bias in the first metal element; and
a power storage unit that is connected to the first metal element and the second metal element, and stores a potential difference generated between the first metal element and the second metal element.

### BRIEF DESCRIPTION OF DRAWINGS

Fig. 1 is a schematic diagram illustrating a schematic configuration of an embodiment of the present technology.
Fig. 2 is a connection diagram of an embodiment of the present technology.
Fig. 3 is a block diagram of an example of a power storage unit.
Fig. 4 is a connection diagram of an example of a power storage unit.
Fig. 5 is a block diagram of another example of a power storage unit.
Fig. 6 is a connection diagram of another example of a power storage unit.
Fig. 7 is a connection diagram of another embodiment of the present technology.
Fig. 8 is a schematic diagram for explaining an operation according to the present technology.
Fig. 9 is a waveform chart for explaining Fig. 8.
Fig. 10 is a schematic diagram for explaining an operation according to the present technology.
Fig. 11 is a schematic diagram for explaining an example application of the present technology.

### MODE FOR CARRYING OUT THE INVENTION

The embodiments described below are preferred specific examples of the present technology, and various technically preferable limitations are put on them. However, the scope of the present technology is not limited to these embodiments unless there is a description to limit the present technology in the following description. Furthermore, in the following description, the same names and reference numerals indicate the same or similar components, and repetitive explanation of them will be omitted as appropriate.

Prior to a description of an embodiment of the present technology, spatial conduction of noise is described. Types of spatial conduction of noise include electrostatic induction, electromagnetic induction, and radiation and reception of radio waves. The present technology relates to electrostatic induction in an electronic device. Electrostatic induction is a phenomenon in which, when an object (a charged object) having electric charge is brought close to a conductor, free electrons in the conductor move, and the charge distribution is biased. That is, positive charges gather on the opposite surface of the conductor to which the object having an electric field is brought close, and a positive potential is generated.

In an electronic device, the circuit component that generates electrostatic induction most is a switching power supply circuit including a switching transistor and an output rectifier diode. Such a circuit component is mounted as an integrated circuit (IC) or a large scale integrated circuit (LSI), and is used in a power supply board called a primary side, for example. Heat is dissipated to the IC or the LSI with a heatsink.

Therefore, a large electrostatic capacitance (floating capacitance) exists between the casing of a circuit component such as an LSI and a heatsink for heat dissipation, for example, and a potential difference is generated from the ground (earth) of the electronic device due to electrostatic induction. In conventional cases, a shielding plate is provided between heatsinks for heat dissipation, and the shielding plate is connected to the ground of an electronic device, to take a countermeasure using a noise return circuit for returning generated charges to the ground. As the shielding plate disposed between the switching transistor and the heatsink to the ground of the electronic device, the shielding plate has the same potential as that of the ground of the electronic device, and the heatsink also has the same potential as that of the ground of the electronic device.

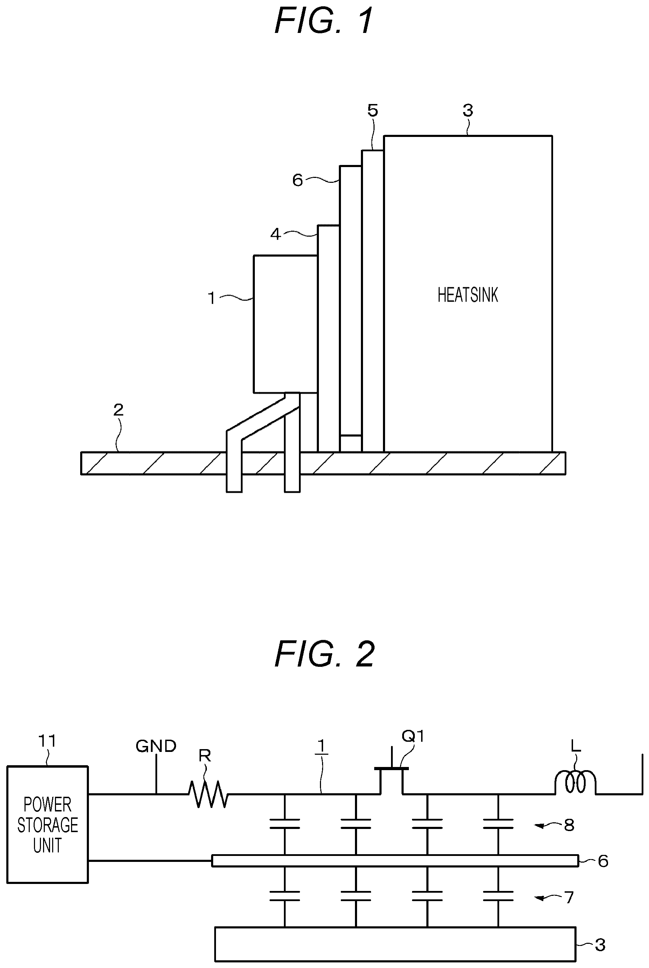

The present technology does not return the energy of noise generated by electrostatic induction to the ground of an electronic device, but converts the energy into energy again and utilizes the energy. Fig. 1 schematically illustrates a configuration of an embodiment.

In Fig. 1, an LSI 1 forming a circuit component, such as a switching power supply circuit, is mounted on a printed wiring board 2. A switching transistor, a coil, and the like are included in the LSI 1. A metal heatsink 3 is provided for heat dissipation from the LSI 1. Insulating plates 4 and 5 and a shielding plate 6 are interposed between the LSI 1 and the heatsink 3.

Conventionally, the shielding plate 6 is electrically connected to the ground (earth) on the printed wiring board 2, so that noise generated in the LSI 1 flows to the ground. In an embodiment, the shielding plate 6 is not connected to the ground, but floats from the ground.

As illustrated in Fig. 2, a floating capacitance 7 is present between the shielding plate 6 floating from the earth and the heatsink 3, and a floating capacitance 8 is present between the LSI 1 (including an FET Q1 as a switching element, a switching inductor L, a resistor R, and the like) and the shielding plate 6. Since the LSI 1 and the shielding plate 6 are electrostatically coupled, electric charges are induced in the shielding plate 6 by electrostatic induction. Therefore, the shielding plate 6 has a potential with respect to the ground of the LSI 1.

A metal (the shielding plate 6, for example) as a measure against noise in which electric charges are induced by electrostatic induction as above is referred to as a first metal element, and a metal that is electrostatically coupled to the first metal element and causes charge bias in the first metal element, such as a ground on the electronic device side having voltage energy, is referred to as a second metal element. A battery included in a power storage unit 11, or a capacitor included in the power storage unit 11 is charged by a potential difference generated between the first metal element (the shielding plate 6) and the second metal element (the ground).

The shielding plate 6 as the first metal element and the power storage unit 11 are in contact with or connected to each other via a metal such as a cable, a metal sheet, or a pin. Similarly, a casing metal portion of the electronic device as the ground serving as the second metal element, and the ground of a control board as a secondary board are in contact with or connected to the power storage unit 11 via a metal such as a cable, a metal sheet, or a pin. With such a configuration, noise having a potential difference generated by electrostatic induction is reused as energy by the power storage unit 11. Further, the energy of noise is converted into electric power again, and thus, noise components are effectively reduced.

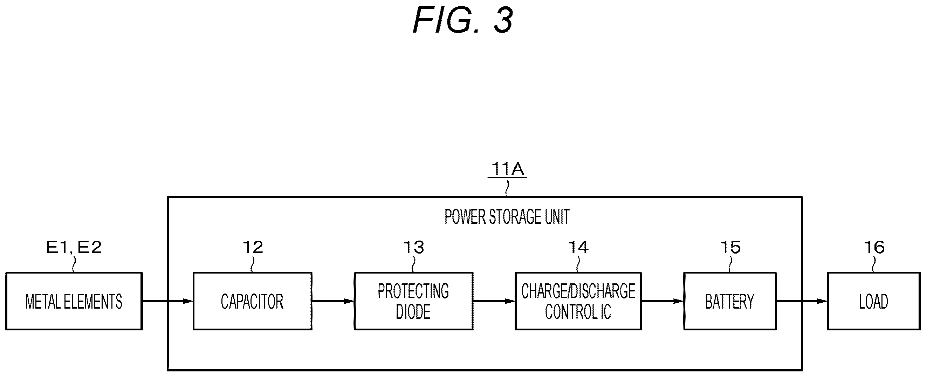

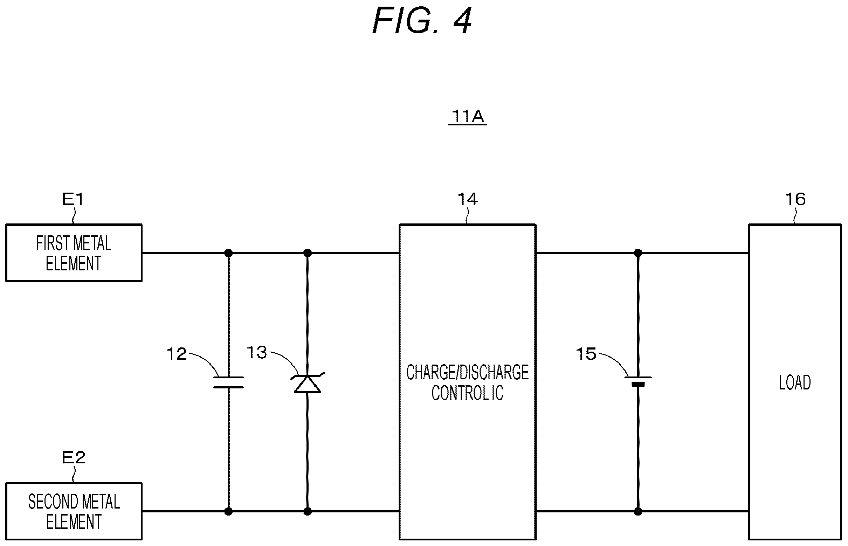

Fig. 3 illustrates a schematic configuration of an example (a power storage unit 11A) of the power storage unit 11, and Fig. 4 illustrates an example of the circuit configuration of the power storage unit 11A. The power storage unit 11A includes a capacitor (capacitive element) 12 that stores the energy of a potential difference generated between a first metal element E1 and a second metal element E2, a protecting diode 13 connected to the subsequent stage of the capacitor 12, a charge/discharge control IC 14, and a battery 15 as a secondary battery. The protecting diode (Zener diode) 13 is for protecting the charge/discharge control IC 14. The charge/discharge control IC 14 is an IC that controls charge/discharge of the battery 15. A load 16 is connected to the battery 15. The charge/discharge control IC 14 is selected as appropriate from configurations of a step-down type, a step-up type, and the like, depending on the electric power that can be harvested, and controls charging/discharging of the battery 15. For example, the battery 15 is charged by constant voltage charging.

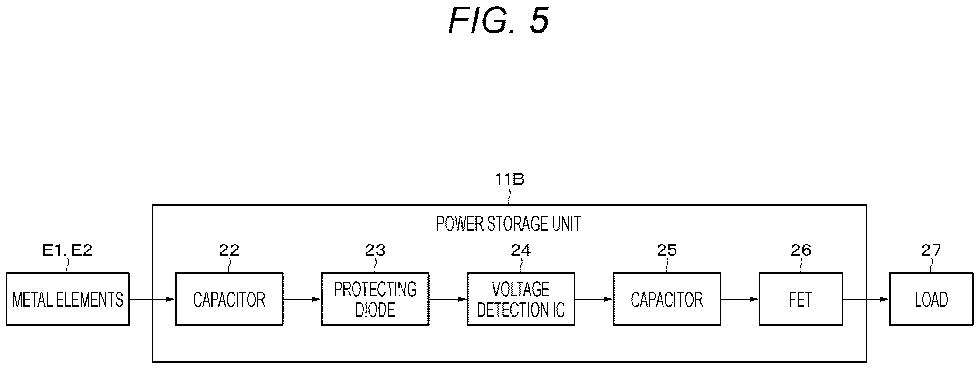

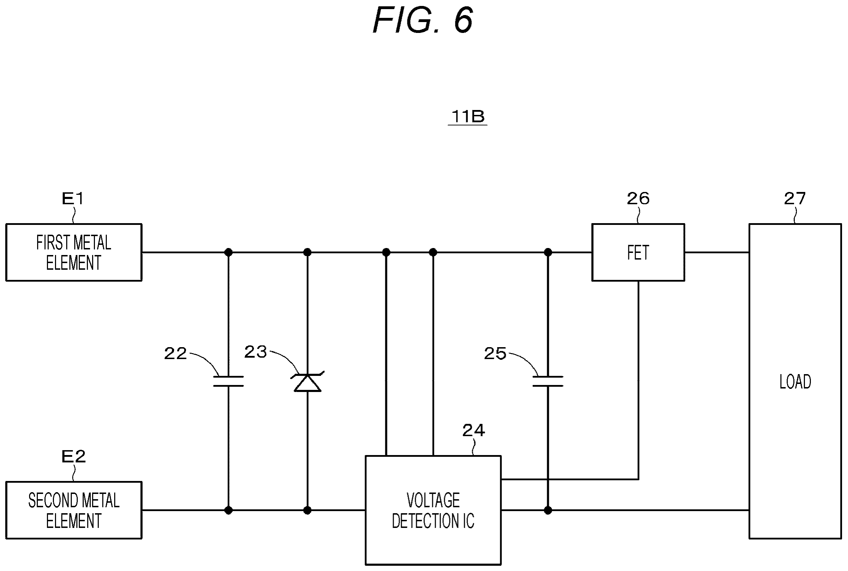

Fig. 5 illustrates a schematic configuration of another example (a power storage unit 11B) of the power storage unit 11, and Fig. 6 illustrates an example of the circuit configuration of the power storage unit 11B. The power storage unit 11B includes a capacitor 22 that stores the energy of a potential difference generated between the first metal element E1 and the second metal element E2, a protecting diode (Zener diode) 23 connected to a subsequent stage of the capacitor 22, a voltage detection IC 24, a capacitor 25 that stores energy like the capacitor 22, and an FET 26 as a switching element. A load 27 is connected to the output of the FET 26.

The drain and the source of the FET 26 are inserted between one end of the capacitor 25 and the load 27, a detection output of the voltage detection IC 24 is supplied to the gate of the FET 26, and switching on/off of the FET 26 is controlled. When detecting that the terminal voltage of the capacitor 25 has reached a predetermined voltage, the voltage detection IC 24 turns on the FET 26, and electric power is supplied to the load 27 through the FET 26.

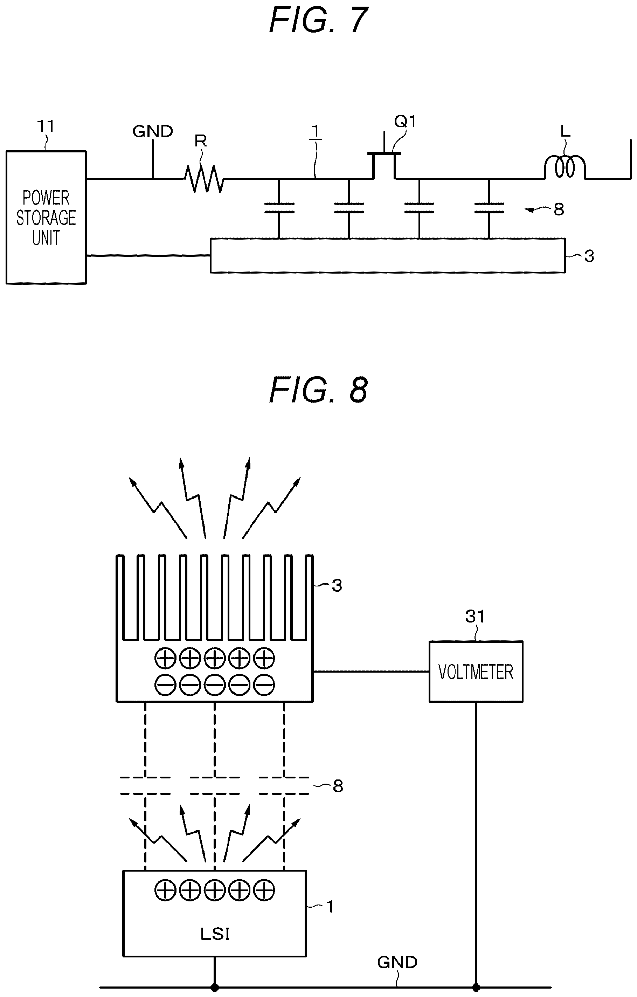

Fig. 7 illustrates another embodiment of the present technology. In the embodiment described above, the present technology is applied in a case where measures against noise are taken. On the other hand, another embodiment is an example in which the shielding plate 6 as measures against noise is not provided. That is, the metal heatsink 3 for heat dissipation is used as the first metal element, and the power storage unit 11 and the heatsink 3 are directly connected. The second metal element is a casing metal portion of the electronic device that is the ground of the electronic device, or is the ground of a control board that is a secondary board, as in the embodiment. According to another embodiment, it is possible to generate electric power and reduce noise by the power storage unit 11 converting noise generated by electrostatic induction into electric power.

Fig. 8 is a schematic diagram for explaining an operation according to another embodiment. The LSI 1 includes a switching power supply circuit, and the casing of the LSI 1 generates positive charges. A charge bias occurs in the heatsink 3 in contact with the LSI 1 due to electrostatic induction, negative (-) charges gather on the side of the heatsink 3 closer to the LSI 1, positive (+) charges gather on the opposite side of the heatsink 3, and a positive (+) potential is generated. Accordingly, the voltage generated by inserting a voltmeter 31 between the ground of the LSI 1, such as a metal chassis, and the heatsink 3 is detected.

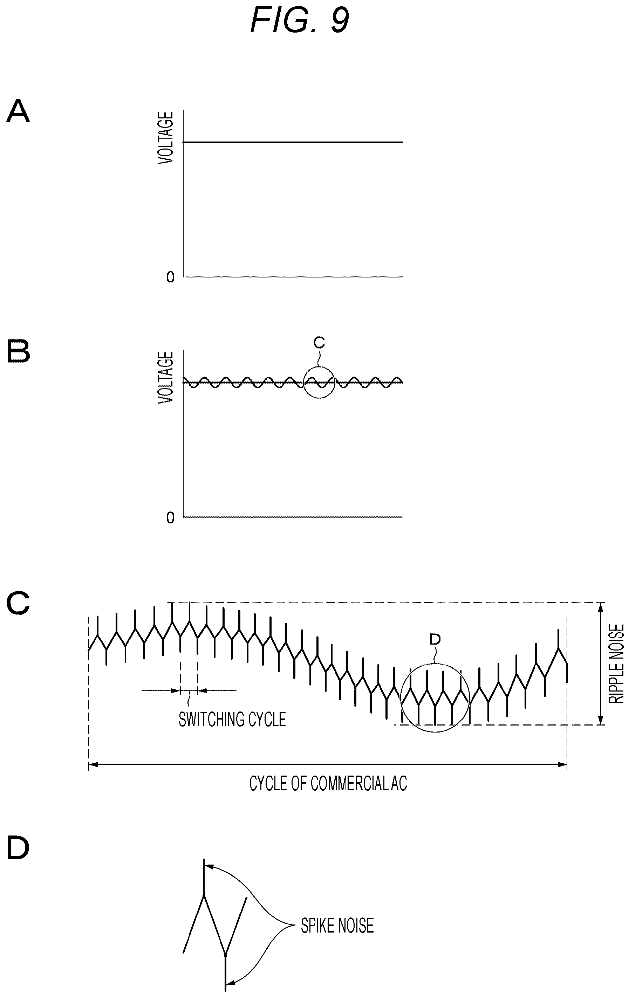

An output generated by the switching power supply of the LSI 1 is obtained by superimposing ripple noise on an ideal direct-current voltage illustrated in Fig. 9A, as illustrated in Fig. 9B. A circled portion C in Fig. 9B is enlarged and shown in Fig. 9C. A circled portion D in Fig. 9C is enlarged and shown in Fig. 9D. As illustrated in Fig. 9D, ripple noise in switching cycles has spike noise. Therefore, noise of various frequency components is radiated from the LSI 1 and is transmitted to the heatsink 3 by electrostatic induction and electromagnetic induction, and noise of various frequency components is also radiated from the heatsink 3.

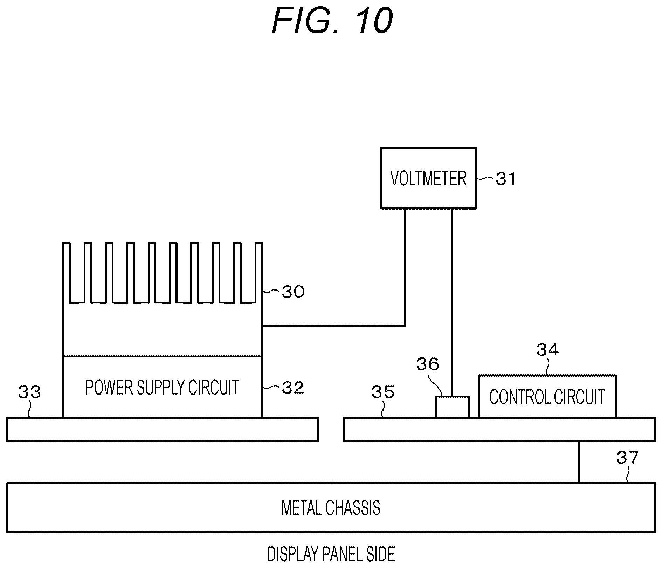

Further, to verify the effects of the present technology, the present technology is applied to a television receiver as illustrated in Fig. 10. Specifically, a power supply circuit 32 including a converter is mounted on a printed circuit board 33, and a heat-dissipating metal heatsink 30 provided for the power supply circuit 32 is used as the first metal element. Furthermore, a ground electrode 36 of a printed circuit board 35 on which a control circuit 34 is mounted is the second metal element. The ground electrode 36 is connected to a metal chassis 37 disposed on the back side of a display panel such as the liquid crystal display of the television receiver.

The heatsink 30 (first metal element) and the ground electrode 36 (second metal element) are connected to a voltmeter 31 by cables. In this configuration, a change in voltage between a standby time of the television receiver and the time when the power to the television receiver was switched on was detected by the voltmeter 31 measuring a change in voltage with direct current. As a result, a potential difference induced between the first metal element and the second metal element was confirmed. As an example, the voltmeter 31 indicated 6 V at the standby time of the television receiver, but the voltmeter 31 indicated 13 V when the power to the television receiver was switched on. Because of this, sufficient electric power was harvested from the energy generated by electrostatic induction among the noise components from the heatsink described above.

As described above, according to the present technology, it was confirmed that electric power can be sufficiently recovered. Further, according to the present technology, electric power can be recovered even during standby. For example, depending on the adopted model, the results of this verification show that electric power equivalent to 30 minutes of the standby power of the television receiver in one day can be obtained, and the standby power can be reduced by using the recovered power. Furthermore, the output voltage of the power storage unit changes between a standby state and a power-on state, and therefore, the operating state of the electronic device (television receiver) can be detected from this change in voltage.

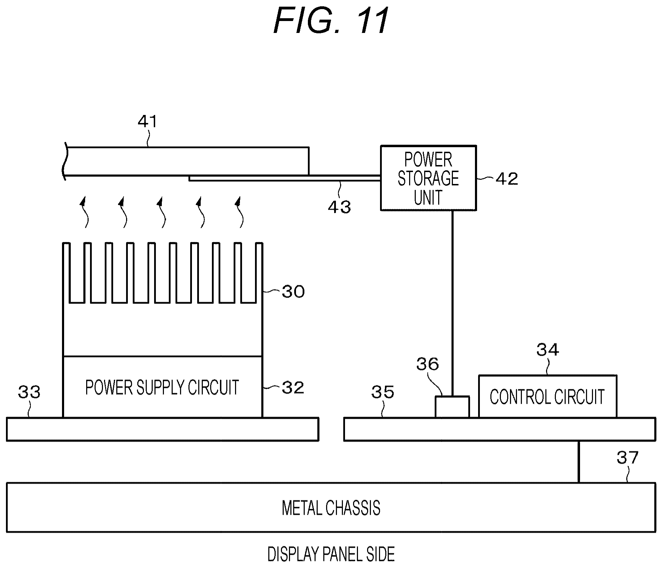

Fig. 11 illustrates an example application in which the present technology is applied to a television receiver. In the case of a television receiver, the television receiver is a flat display, a plate-like metal chassis 37 is provided on the back surface of a display panel such as a liquid crystal display, and a power supply board 33 and a control board 35 are attached onto the metal chassis 37. The power supply board 33 is a printed circuit board on which switching elements and circuit components are mounted, and the control board 35 is a printed circuit board on which circuit components other than the power supply circuit, such as circuit components for signal processing, are mounted. It has been confirmed that the heatsink 30 of the power supply board 33 is a floating existence in terms of potential in the television receiver, and has a large potential difference with respect to the metal chassis 37 and the ground of the control board 35. For example, a direct-current voltage of 2.39 V, for example, is generated in the metal chassis 37. Therefore, it is conceivable to adopt a configuration in which the metal chassis 37 is used as the first metal element, and the ground electrode 36 of the printed circuit board 35 on which the control circuit 34 is mounted is used as the second metal element.

For electronic devices such as television receivers, safety standards are set in each country, such as UL (Underwriters Laboratories Inc.) standards in the United States, for example. In view of the safety defined in the safety standards, in a case where it is necessary to keep a certain distance from the power supply board (primary side), it is effective to adopt a configuration in which a metal floating from the ground such as the heatsink 30 and a power storage unit 42 are not directly connected, but a predetermined distance is kept from the printed circuit board 33, as illustrated in Fig. 11. That is, instead of directly connecting the heatsink 30 and the power storage unit 42, a thin metal sheet 43 is installed in a place where electrostatic induction is easily caused by the heatsink 30, such as a casing 41 formed with resin, and the metal sheet 43 as the first metal element is connected to the power storage unit 42. As the second metal element, the ground electrode 36 is used. As the metal sheet 43, a material such as copper or aluminum is used. Further, other than the casing 41 formed with resin, a metal structure may be the first metal element, and a metal sheet, a cable, or the like may be connected thereto or brought into contact therewith for connection. As the power storage unit 42, a component that stores power recovered in a battery as described above, or a component that stores power recovered in a capacitor can be used.

Although the present embodiment is an example of harvesting from a heatsink by electrostatic induction in a device, it is also possible to harvest using a metal portion and a ground induced by electrostatic induction in the electronic device. For example, it is also possible to harvest between the ground and a metal portion of a television receiver electrically floating from the ground. In this case, by using a painted metal surface of a television receiver as the first metal element and the ground as the second metal element, there is no need to take measures against electric leakage, and thus, the present embodiment can be adopted.

By using such a floating metal, the present embodiment can be applied not only to a television receiver but also to other devices.

Note that the present technology can be applied not only to television receivers but also to vending machines, refrigerators, washing machines, dryers, microwave ovens, game machines, in-vehicle electronic circuits, air conditioners, various measuring instruments, factory robots, electronic devices such as server devices, unmanned aerial vehicles (drones), and the like.

The present technology described above can provide a compact and low-cost power storage device that does not require a rectifier circuit and an antenna, unlike a configuration that recovers power by rectifying noise components generated by electromagnetic induction, or received radio waves. Note that a harvester having a rectifier circuit and an antenna may be used in combination with a power storage device according to the present technology.

A power generation device of the present technology can supply power to an electronic device and its peripheral devices by converting electromagnetic wave noise generated from the electronic device into power, so that energy can be efficiently utilized. Accordingly, the power generation device of the present technology can relate to Goal 7 "Affordable and Clean Energy" of the Sustainable Development Goals (SDGs) adopted at the UN summit in 2015.

Although the embodiments of the present technology have been specifically described above, the present technology is not limited to the above embodiments, and various modifications based on the technical idea of the present technology can be made to them. Furthermore, one or a plurality of any selected modes of modifications can be combined as appropriate. Furthermore, the configurations, methods, steps, shapes, materials, numerical values, and the like of the above-described embodiments can be combined with each other without departing from the gist of the present technology. For example, power generation using the present technology and natural energy, such as solar power generation and a thermoelectric conversion element, may be used in combination to store energy.

Note that the present technology can also have the following configurations.
(1) A power storage device including:
   a first metal element electrically floating from a ground;
   a second metal element that is electrostatically coupled to the first metal element to cause charge bias in the first metal element; and
   a power storage unit that is connected to the first metal element and the second metal element, and stores a potential difference generated between the first metal element and the second metal element.
(2) The power storage device according to (1), in which the first metal element includes a metal member disposed in contact with or in proximity to a circuit component mounted on a printed circuit board.
(3) The power storage device according to (2), in which the circuit component includes a switching power supply circuit.
(4) The power storage device according to any one of (1) to (3), in which the first metal element includes a metal located away from the printed circuit board on which the circuit component is mounted.
(5) The power storage device according to any one of (1) to (3), in which any one of a metal sheet, a cable, or a metal structure is provided for connection between the first metal element and the power storage unit.
(6) The power storage device according to any one of (1) to (3), in which the power storage unit includes a capacitor for storing electric charge obtained from an obtained potential difference, or a battery.
(7) The power storage device according to (6), further including:
   a voltage detection device that detects a voltage of the capacitor; and
   a switch that is inserted between the capacitor and a load, and is turned on and off by a signal from the voltage detection device, depending on a state of charging of the capacitor.
(8) The power storage device according to (7), in which a Zener diode for protecting the voltage detection device is provided at a preceding stage of the voltage detection device.
(9) The power storage device according to (6), in which a charge and discharge control circuit that performs constant voltage charging on the battery is provided.
(10) The power storage device according to (9), in which a Zener diode for protecting the charge and discharge control circuit is provided at a preceding stage of the charge and discharge control circuit.

### REFERENCE SIGNS LIST

- 1: LSI
- 3: Heatsink
- 6: Shielding plate
- 7, 8: Electrostatic capacitance
- 11, 11A, 11B: Power storage unit
- 14: Charge/discharge control IC
- 15: Battery
- 24: Voltage detection IC
- 25: Capacitor
- E1: First metal element
- E2: Second metal element

## Claims

1. A power storage device comprising:
a first metal element electrically floating from a ground;
a second metal element that is electrostatically coupled to the first metal element to cause charge bias in the first metal element; and
a power storage unit that is connected to the first metal element and the second metal element, and stores a potential difference generated between the first metal element and the second metal element.

2. The power storage device according to claim 1, wherein the first metal element includes a metal member disposed in contact with or in proximity to a circuit component mounted on a printed circuit board.

3. The power storage device according to claim 2, wherein the circuit component includes a switching power supply circuit.

4. The power storage device according to claim 1, wherein the first metal element includes a metal located away from the printed circuit board on which the circuit component is mounted.

5. The power storage device according to claim 1, wherein any one of a metal sheet, a cable, or a metal structure is provided for connection between the first metal element and the power storage unit.

6. The power storage device according to claim 1, wherein the power storage unit includes one of a capacitor for storing electric charge obtained from an obtained potential difference, or a battery.

7. The power storage device according to claim 6, further comprising:
a voltage detection device that detects a voltage of the capacitor; and
a switch that is inserted between the capacitor and a load, and is turned on and off by a signal from the voltage detection device, depending on a state of charging of the capacitor.

8. The power storage device according to claim 7, wherein a Zener diode for protecting the voltage detection device is provided at a preceding stage of the voltage detection device.

9. The power storage device according to claim 6, wherein a charge and discharge control circuit that performs constant voltage charging on the battery is provided.

10. The power storage device according to claim 9, wherein a Zener diode for protecting the charge and discharge control circuit is provided at a preceding stage of the charge and discharge control circuit.
